(19) Europäisches Patentamt
European Patent Office
Office européen des brevets

(11) **EP 4 299 523 A1**

(12) **EUROPEAN PATENT APPLICATION**

(43) Date of publication:
03.01.2024  Bulletin 2024/01

(21) Application number: 22182220.8

(22) Date of filing: 30.06.2022

(51) International Patent Classification (IPC):
**C01D 5/00** (2006.01)   **C05C 3/00** (2006.01)
**C05G 5/30** (2020.01)

(52) Cooperative Patent Classification (CPC):
(C-Sets available)
**C05G 5/30; C01D 5/08; C01F 11/18; C01F 11/24;
C05C 3/00;** C01P 2004/50; C01P 2006/82   (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SABIC Global Technologies B.V.
4612 PX Bergen op Zoom (NL)**

(72) Inventors:
• **MAMEDOV, Aghaddin**
  **Sugar Land, TX 77478 (US)**
• **AL-RABHI, Mohamed**
  **Sugar Land, TX 77478 (US)**

(74) Representative: **J A Kemp LLP
80 Turnmill Street
London EC1M 5QU (GB)**

(54) **KNH4SO4, CACO3, CACL2 FERTILIZER**

(57)   A fertilizer containing a mixture containing potassium ammonium phosphate, slow-release calcium, and immediate-release calcium and methods of making and using the fertilizer.

## FIG. 1

EP 4 299 523 A1

(52) Cooperative Patent Classification (CPC): (Cont.)

C-Sets
**C05C 3/00, C05D 1/02, C05D 3/00, C05D 3/02**

**Description**

**BACKGROUND OF THE INVENTION**

**I. Field of the Disclosure**

This disclosure generally concerns fertilizers containing calcium. In particular embodiments, the disclosure concerns fertilizers containing calcium, potassium, carbon, and sulfur.

**II. Background**

Soil nutrients, such as nitrogen, phosphorus, potassium, and sulfur, as well as trace elements such as iron, zinc, copper, and magnesium, are useful for achieving thriving agriculture and growth of plants. Upon repeated planting cycles, the quantity of these nutrients in the soil may be depleted, resulting in inhibited plant growth and decreased production. To counter this effect, fertilizers have been developed to help replace the depleted vital nutrients. Single-nutrient fertilizers and multi-nutrient fertilizers, such as fertilizer blends, have been developed to meet the varied needs of crop production worldwide.

Application of a fertilizer does not always provide the full amount of the nutrients in the fertilizer to the plant within a short period of time. Some fertilizers contain nutrient containing compounds that are not readily available to the plant upon application. In these circumstances, some apply fertilizer well before the planting of plants, or some over fertilize closer to the planting of the plants to provide sufficient nutrients to the plant initially. However, this comes at the cost of time, may require multiple treatments to the soil before or after planting, and/or increases expenses.

In addition to immediate release fertilizers, plants, such as crop plants, need nutrients at least over the entire growth and maturation period for the plant. However, many fertilizers when applied to a soil disperse, are degraded, or are taken up within a short period of time after application. To address this issue, fertilizers can be applied multiple times to the same plants or slow release fertilizers can be used. Some approaches to slow release fertilizers include polymer coating a fertilizer core. Though, many polymer coatings are expensive and will undesirably build up in the soil over time after repeated applications.

Fertilizing plants can increase growth and production of plants that increase plant photosynthesis. Increased plant photosynthesis in turn increases carbon dioxide ($CO_2$) consumption, which is a top priority in many industries due to environmental consciousness as well as industrial regulation. However, production of some fertilizers, transportation of fertilizers, and other fertilizer industry related activities can produce $CO_2$. Some industries have attempted to capture and store or chemically change $CO_2$ to meet environmental goals and regulation requirements. As one example, $CO_2$ has been captured and reacted to product CO, urea, or other products that have an industrial value or products that can be stored. However, these reactions often requires excessive consumption of energy. As another example, some industries are making efforts to store $CO_2$ deep underground.

There is a need for additional ways to reduce $CO_2$ as well as provide additional fertilizers and ways to produce fertilizers that are cost effective.

**SUMMARY OF THE INVENTION**

A solution to at least some of the problems discussed above is disclosed herein that includes providing immediate and sustained release of calcium in one fertilizer product that also consumes $CO_2$ in the production of the fertilizer. In one aspect, the solution resides in providing a fertilizer comprising potassium ammonium sulfate ($KNH_4SO_4$); and at least two different calcium (Ca) compounds. In some instances, at least a portion of Ca can be present as calcium carbonate and/or calcium chloride. A method of producing the fertilizer is able to consume $CO_2$ as well as $NH_3$ and $CaSO_4$. The $CO_2$, $NH_3$, and $CaSO_4$ can in some instances be sourced from waste products, such as $CO_2$ and/or $NH_3$ of waste products from manufacturing plants and $CaSO_4$ of phosphogypsum from production of phosphoric acid or $CaSO_4$ of slag from metal smelting or refining. Phosphogypsum can be generated as a byproduct during phosphoric acid production. Thus, the starting materials can be readily available and use thereof can reduce waste. In some embodiments, synthesis of at least part of the fertilizer occurs through reacting calcium sulfate ($CaSO_4$) with carbon dioxide ($CO_2$) and ammonia ($NH_3$).

$$CaSO_4.2H_2O + CO_2 + 2\,NH_3 \rightarrow CaCO_3 + (NH_4)_2SO_4 + H_2O$$

In some embodiments, potassium chloride (KCl) is also reacted with $CaSO_4$, $CO_2$, and $NH_3$ to generate the fertilizer.

$$2\ CaSO_4 + H_2O + CO_2 + 2\ NH_3 + 2\ KCl \rightarrow CaCO_3 + 2\ KNH_4SO_4 + CaCl_2$$

Intermediate reactions that occur to generate the fertilizer may include:

$$2KCl + CaSO_4 \rightarrow CaCl_2 + K_2SO_4$$

$$K_2SO_4 + NH_3 + H_2O \rightarrow KNH_4SO_4 + KOH$$

$$2KOH + CaSO_4 \rightarrow K_2SO_4 + Ca(OH)_2$$

$$Ca(OH)_2 + CO_2 \rightarrow CaCO_3 + H_2O$$

The final product may contain a mixture of the above composition chemicals, including a complex of $KNH_4SO_4/CaCl_2/CaCO_3$. In some instances, $CaCl_2$ and $CaCO_3$ are produced simultaneously, generating a mixture of $CaCl_2/CaCO_3$. In some embodiments, such a mixture allows for immediate release of calcium through $CaCl_2$ and also a controlled, slow-time release of calcium through $CaCO_3$ when the mixture is used as a fertilizer. In some embodiments, the $CaCO_3$ at least partially encapsulates the $KNH_4SO_4$ and/or the $CaCl_2$, which can slow the release of the nutrients from these at least partially encapsulated compounds.

Fertilizers herein may comprise nitrogen and sulfur as well as calcium, which is essential for plant growth, overall health, and yield. Calcium plays a role in producing plant tissues, and therefore improves plant growth. Calcium, for example, can be responsible for holding together the cell walls of plants. Calcium also activates certain enzymes and is used to send signals that coordinate certain cellular activities. Calcium can be used to treat blossom end rot in tomato and tip burn of cabbage. Calcium can also be used to reduce the risk of bitter pit occurrence, fruit softening, postharvest injury, and minor cracking.

Fertilizer disclosed herein can also contain chlorine compounds such as $CaCl_2$. Chlorine compounds can improve plant growth, tissue water balance, plant water relations, photosynthetic performance, and water-use efficiency. They can increase plant biomass and may also improve nitrogen (N) use efficiency. Miguel Rosales et al. (Front. Plant Sci., 26 May 2020) showed that $Cl^-$ facilitates $NO_3^-$ utilization and improves its use efficiency in plants. The chlorine content can be varied to meet crop needs. In some embodiments, mixtures containing chlorine are used in high rainfall regions.

One aspect of the present invention is directed to a fertilizer. The fertilizer can comprise a homogenous mixture comprising the $KNH_4SO_4$ double salt and at least two different calcium compounds. One of the two different calcium compounds may be calcium chloride ($CaCl_2$). One of the two different calcium compounds may be calcium carbonate ($CaCO_3$). In some aspects, the two different calcium compounds include $CaCl_2$ and $CaCO_3$. In some aspects, the slow-release calcium, such as $CaCO_3$, may at least partially encapsulate at least a portion of the $KNH_4SO_4$ double salt and/or the $CaCl_2$. The encapsulation in some instances can be the caused by the method of producing the fertilizer as disclosed herein. In certain aspects, the sulfur is sourced from recycled gypsum and/or waste gypsum, such as phosphogypsum. In certain aspects, $CO_2$ is sourced from a waste stream and/or is concentrated from a waste stream.

In certain aspects, the fertilizer comprises 12 wt. % to 16 wt. % of nitrogen, such as within 12 wt. % to 15 wt. %, which may be in the form of ammonium ($NH_4$), 20 wt. % to 23 wt. % of sulfur, which may be in the form of sulfate ($SO_4$), and 10 wt. % to 14 wt. % of potassium (K), where the wt. % are based on the total weight of the fertilizer.

Certain aspects are directed to a method of making a fertilizer, including any fertilizer described herein. The method can include steps (a), (b), and/or (c). In step (a), calcium sulfate, such as a calcium sulfate suspension, can be contacted with ammonia and carbon dioxide to generate a first product comprising calcium carbonate ($CaCO_3$) and ammonium sulfate (($NH_4)_2SO_4$). In step (b), a calcium sulfate, such as a calcium sulfate suspension, which may or may not be from the same calcium sulfate source of step (a), can be contacted with potassium chloride to generate a second product comprising calcium chloride (CaCh) and potassium sulfate ($K_2SO_4$). In step (c), the product from step (a) and the product from step (b) can be mixed to generate a fertilizer. The source of calcium sulfate from step (a) or step (b) may comprise gypsum, such as from phosphogypsum. In some aspects, step (b) comprises contacting at least a portion of the first product with the potassium chloride. In some aspects, at least a portion of the calcium sulfate of step (b) is obtained from unreacted calcium sulfate of step (a). In some aspects, all of the calcium sulfate of step (b) is obtained from unreacted calcium sulfate of step (a). In some aspects, at least a portion of the first product is reacted with the potassium chloride in step (b) to produce $KNH_4SO_4$ by a reaction such as the following:

$$K_2SO_4 + NH_3 + H_2O \rightarrow KNH_4SO_4 + KOH.$$

In certain aspects, step (c) generates a fertilizer comprising $KNH_4SO_4$, CaCh, and $CaCO_3$. Step (a) and/or step (b) may occur at approximately 40°C to 80°C, such as any one of, between, greater than, or less than, or any range thereof 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90°C.

Also disclosed are the following Aspects 1 to 15 of the present invention.

Aspect 1 is a fertilizer comprising a mixture comprising:

potassium ammonium sulfate ($KNH_4SO_4$); and
at least two different calcium compounds.

Aspect 2 is the fertilizer of Aspect 1, wherein the at least two different calcium compounds comprises calcium chloride (CaCh).

Aspect 3 is the fertilizer of any one of Aspects 1 or 2, wherein the at least two different calcium compounds comprises calcium carbonate ($CaCO_3$).

Aspect 4 is the fertilizer of any one of Aspects 1 to 3, wherein the $CaCO_3$ at least partially encapsulates at least a portion of the $KNH_4SO_4$.

Aspect 5 is the fertilizer of any one of Aspects 1 to 4, wherein the at least two different calcium compounds comprise $CaCl_2$ and $CaCO_3$.

Aspect 6 is the fertilizer of Aspect 5, wherein the weight ratio of $CaCO_3$ to $CaCl_2$ is 4:1 to 10:1.

Aspect 7 is the fertilizer of any one of Aspects 1 to 6, wherein the mixture comprises

12 wt. % to 16 wt. % nitrogen present in the form of ammonium;
20 wt. % to 23 wt. % sulfur in the form of sulfate; and
10 wt. % to 14 wt. % potassium; wherein the wt. % are based on the total weight of the fertilizer.

Aspect 8 is a method for making a fertilizer, the method comprising

(a) contacting calcium sulfate with ammonia and carbon dioxide to generate a first product comprising calcium carbonate ($CaCO_3$) and ammonium sulfate (($NH_4)_2SO_4$) and optionally unreacted calcium sulfate;
(b) contacting calcium sulfate with potassium chloride to generate a second product comprising calcium chloride (CaCh) and potassium sulfate ($K_2SO_4$); and
(c) mixing the first product and the second product to generate the fertilizer.

Aspect 9 is the method of Aspect 8, wherein a source of calcium sulfate in step (a) and/or (b) is gypsum.

Aspect 10 is the method of any one of Aspects 8 or 9, wherein step (b) comprises contacting at least a portion of the first product with the potassium chloride.

Aspect 11 is the method of Aspect 10, wherein the at least a portion of the calcium sulfate of step (b) is obtained from unreacted calcium sulfate of step (a).

Aspect 12 is the method of any one of Aspects 10 to 11, wherein all of the calcium sulfate of step (b) is obtained from unreacted calcium sulfate of step (a).

Aspect 13 is the method of any one of Aspects 10 to 12, wherein contacting at least a portion of the first product with the potassium chloride in step (b) produces $KNH_4SO_4$ by reacting potassium sulfate with ammonia in water.

Aspect 14 is the method of any one of Aspects 8 to 13, wherein step (c) generates a fertilizer comprising $KNH_4SO_4$, CaCh, and $CaCO_3$.

Aspect 15 is the method of Aspect 8 to 14, wherein the contacting step (a) and/or contacting step (b) occur at approximately 50°C to 70°C.

Aspect 16 is the method of any one of Aspects 8 to 15, wherein the fertilizer comprises the fertilizer of any one of Aspects 1 to 5.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of' any of the ingredients or steps disclosed throughout the specification. Compositions and methods "consisting essentially of' any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

## BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

FIG. 1: Example cross-sectional view of a fertilizer granule according to a non-limiting example of a fertilizer granule described herein.

FIG. 2: a schematic of a system and method for producing a fertilizer according to a non-limiting example of a system and method disclosed herein.

FIG. 3: a schematic of a system and method for producing a fertilizer according to another non-limiting example of a system and method disclosed herein.

## DETAILED DESCRIPTION OF THE INVENTION

Certain aspects of the present disclosure provide benefits over existing fertilizers, including by having both immediate and slow-release characteristics for calcium. Certain aspects provided herein allow for the fertilizer to immediately release calcium into the soil for use by plants, while also allowing for the fertilizer to slowly release calcium into the soil over a period of time, such as throughout a growing cycle for a plant. This dual-release capability can be achieved, in some aspects, without the use of binders, inhibitors, or other interventions that add compounds beyond the fertilizer's nutrients. In some embodiments, the fertilizer consists of two calcium compounds, one immediate-release and one slow-release, and a double salt, which may be one chemical composition and/or one homogenous mixture. In some instances, a method of producing the fertilizer is able to consume $CO_2$ as well as $NH_3$ and $CaSO_4$. The $CO_2$, $NH_3$, and $CaSO_4$ can in some instances be sourced from waste products, such as $CO_2$ and/or $NH_3$ of waste products from manufacturing plants and $CaSO_4$ of phosphogypsum from production of phosphoric acid or $CaSO_4$ of slag from metal smelting or refining. Phosphogypsum can be generated as a byproduct during phosphoric acid production. Thus, the starting materials can be readily available and use thereof can reduce waste.

## I. Fertilizer

Certain embodiments herein concern a complex fertilizer comprising $KNH_4SO_4$, $CaCO_3$, and $CaCl_2$. Certain aspects involve synthesis of the nutrient complex using natural sources of ingredients of the fertilizer, such as $CaSO_4$, KCl, and $CO_2$. In addition to these feed sources, ammonia also is used, in some embodiments.

The fertilizer, which may be a fertilizer granule, may contain a homogeneous mixture containing calcium (Ca), potassium (K), nitrogen (N) present as ammonium, carbon (C) present as carbonate, and sulfur (S) present as sulfate. The ratio of elements present in the fertilizer may be tailored to specific applications. At least a portion of Ca can be present as calcium carbonate and/or calcium chloride. In some aspects, at least 90 wt. %, or at least 95 wt. %, or 90 wt.

% to 100 wt. %, or at least any one of, at most any one of, equal to any one of, or between any two of 90, 91, 92, 93, 94, 95, 96, 97, 98, 99, 99.5, and 100 wt. % of the Ca in the homogeneous mixture can be present as calcium carbonate and/or calcium chloride, based on the total weight of Ca in the homogeneous mixture. In some embodiments, at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, and 99.5 wt. % of the Ca in the homogeneous mixture can be present as calcium carbonate. In some embodiments, at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, and 99.5 wt. % of the Ca in the homogeneous mixture can be present as calcium chloride. In some aspects, the homogeneous mixture can contain i) $KNH_4SO_4$ in an amount providing at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99, wt. % based on the total weight of the homogeneous mixture and/or the fertilizer granule; ii) $CaCO_3$ in an amount providing at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99 wt. % based on the total weight of the homogeneous mixture and/or the fertilizer granule; and iii) $CaCl_2$ in an amount providing at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99 wt. % based on the total weight of the homogeneous mixture and/or the fertilizer granule. In some instances, the weight ratio of $CaCO_3$ to $CaCl_2$ is at least any one of, at most any one of, equal to any one of, or between any two of 4:1, 5:1, 6:1, 7:1, 8:1, 9:1, and 10:1.

In some aspects, the homogenous mixture comprises Ca, S, N, and/or C, wherein i) the Ca content of the homogenous mixture can be at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 98.5 wt. %, ii) the S content of the homogenous mixture can be at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 98.5 wt. %, iii) the N content of the homogenous mixture can be at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 98.5 wt. %, and iv) the C content of the homogenous mixture can be at least any one of, at most any one of, equal to any one of, or between any two of 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 98.5 wt. %, based on the total weight of the homogeneous mixture and/or fertilizer.

The Ca, S, N, and/or C can be present as and/or sourced as a water soluble compound or a water insoluble compound. In some instances, the Ca, S, N, and/or C can be present as a salt. In some aspects, the Ca, S, N, and/or C can be present as a water soluble salt. In some instances, the water soluble Ca salt can be $CaCl_2$. The Ca, S, N, and/or C salt can be in a non-hydrate and/or one or more hydrate form.

The fertilizer can be produced by (a) contacting calcium sulfate with ammonia and carbon dioxide to generate a first product comprising calcium carbonate ($CaCO_3$) and ammonium sulfate ($(NH_4)_2SO_4$) and optionally unreacted calcium sulfate; (b) contacting calcium sulfate with potassium chloride to generate a second product comprising calcium chloride (CaCh) and potassium sulfate ($K_2SO_4$); and (c) mixing the first product and the second product to generate the fertilizer.

Contacting step (a) and/or contacting step (b) can occur at any temperature suitable to cause the reaction, including at or between 40°C to 90°C, such as any one of, between, or above or below 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90°C. Contacting step (a) and/or contacting step (b) can occur for any period of time sufficient to react 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5 or 100 % of any of the starting materials, including for 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 99.5 minutes, hours, or days. In certain aspects, the ammonia and/or carbon dioxide is pressurized prior to the contacting step. The ammonia and/or carbon dioxide can be pressurized to any suitable pressure for the contacting step, such as within 5 to 30 bars for the contacting step, such as any one of, between, or above or below 5, 6, 7, 8, 9, 10, 11, 12, 13, 14, 15, 16, 17, 18, 19, 20, 21, 22, 23, 24, 25, 26, 27, 28, 29, 30 bar.

Contacting step (a) and contacting step (b) may occur at the same time or at different times. Contacting step (b) may occur while mixing step (c) is occurring. Starting materials for any of the steps can be added during any of the contacting steps at any time during the step, including while the contacting step is occurring. The starting materials for any of the contacting steps may be added in any order. In certain aspects, carbon dioxide is contacted with calcium sulfate before, during, or after the ammonia is contacted with the calcium sulfate. In certain aspects, the carbon dioxide is mixed with the ammonia prior to or during contacting the mixture with calcium sulfate. In some aspects, contacting step (a) and/or contacting step (b) are still occurring when the two products are mixed in step (c).

At least a portion of the unreacted calcium sulfate from step (a) can be used as the calcium sulfate in step (b). In certain aspects, at least a portion of the unreacted calcium sulfate in step (a) is separated from the calcium carbonate and ammonium sulfate prior to contacting the unreacted calcium sulfate with the potassium chloride. In certain aspects, the unreacted calcium sulfate in step (a) is not separated from the calcium carbonate and ammonium sulfate prior to contacting the calcium sulfate with the potassium chloride.

Moisture content of the dried fertilizer can be less than 1 wt. %, such as 0.1 wt. % to 0.9 wt. %, or any one of or between any two of 0.1, 0.2, 0.3, 0.4, 0.5, 0.6, 0.7, 0.8, 0.9, or 1 wt. %, or any range thereof, based on the weight of the fertilizer. As a non-limiting example, the moisture content can be measured by drying the sample at 50°C, for 25 min and measuring the amount of mass lost by the fertilizer after being dried.

In some particular aspects, the homogeneous mixture can contain and/or can be obtained from phosphogypsum.

A fertilizer granule can be of any suitable shape. Non-limiting shapes include spherical, cuboidal, cylindrical, puck shape, oval, and oblong shapes. In some aspects, the fertilizer granule can be of cylindrical shape with a circular, elliptical, ovular, triangular, square, rectangular, pentagonal, or hexagonal cross section, although cylindrical shaped core having a cross-section of other shapes can also be made. In some aspects, the fertilizer granule at its widest dimension can be 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer granule can have a substantially spherical shape with an average diameter 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm.

The fertilizer can be water and/or soil dispersible. In some aspects, a fertilizer granule having a size of 2 mm to 4 mm prior to adding to water, can disintegrate into particles having sizes less than 1 mm, less than 0.9 mm, less than 0.8 mm, less than 0.7 mm, less than 0.6 mm, less than 0.5 mm, less than 0.4 mm, or less than 0.3 mm, within 1 minute of adding the granule to water at a pH 7, under stirring at a rate 90 rpm to 110 rpm, at an ambient temperature.

The homogeneous mixture can have a compositional make-up that is substantially homogeneous. In some instances, a compositional make-up for a 1 mm $\times$ 1 mm $\times$ 1 mm cube at any position of the mixture can be similar (within $\pm$ 20 %, or $\pm$ 10 %, or $\pm$ 5 %, or $\pm$ 3 %, $\pm$ 2 %, or $\pm$ 1 %, or $\pm$ 0.5 %) to that of a 1 mm $\times$ 1 mm $\times$ 1 mm cube at any other position of the mixture.

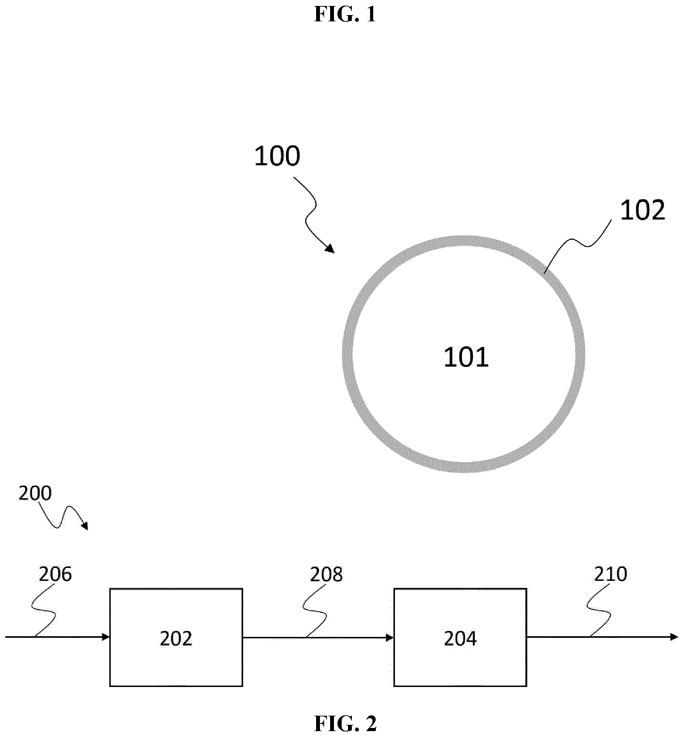

Referring to FIG. 1, a fertilizer granule 100 according to one example of the present invention is shown. The fertilizer granule 100 can contain an homogeneous mixture 101. The homogeneous mixture 101 can have compositions as described above. In some instances, the homogenous mixture 101 can have an optional coating 102 on the outer surface of the homogenous mixture 101.

In some instances, the fertilizer comprises a matrix of $CaCO_3$ that at least partially surrounds and/or encapsulates at least a portion of the $CaCl_2$ and/or $KNH_4SO_4$. In some aspects, the fertilizer comprises particles of $CaCO_3$, $CaCl_2$, and/or $KNH_4SO_4$.

In some aspects, additional fertilizer substances can be included or excluded in the fertilizer. If included, additional fertilizers can be chosen based on the particular needs of certain types of soil, climate, or other growing conditions to maximize the efficacy of the fertilizer in enhancing plant growth and crop yield. Additional additives may also be included or excluded in the fertilizer. Non-limiting examples of additives that can be included or excluded from the fertilizer of the present invention include nitrogen nutrients, phosphorus nutrients, potassium nutrients, additional micronutrients, additional secondary nutrients, binders, inhibitors, pH buffers, drying agents, etc. In some instances, the additional fertilizer substances and/or the additional additives are contained in the optional coating of the fertilizer.

The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and potassium nitrate. In some aspects, the additional secondary nutrients may include lime and/or superphosphate.

In some instances, the inhibitors include nitrification inhibitors and/or urease inhibitors. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor can comprise DMPP, DCD, TU, nitrapyrin, 5-ethoxy-3-trichloromethyl-1,2,4-thiadiazol, AM, MBT, or ST, or a combination thereof. In some embodiments, a fertilizer composition can comprise NBTPT, DMPP, TU, DCD, PPDA, nitrapyrin, 5-ethoxy-3-trichloromethyl-1,2,4-thiadiazol, AM, MBT, ST, or a combination thereof.

In some instances, a binder includes a phosphate, a polyphosphate, a biodegradable polymer, or a wax, or a combination thereof. Suitable waxes include, but are not limited to, vegetable waxes, high melt waxes, ethylene bis(stearamide) wax, paraffin waxes, polyethylene based waxes, and olefin waxes. Suitable phosphates include, but are not limited to, diammonium phosphate, and monoammonium phosphate. Suitable polyphosphates include, but are not limited to, ammonium polyphosphate. Suitable biodegradable polymers include, but are not limited to, polyacrylamide, polyacrylic acid, polyacrylonitrile, biodegradable polylactic acid and other biodegradable polymeric material such as polylactic acid, poly(3-hydroxypropionic acid), polyvinyl alcohol, poly e-caprolactone, poly L-lactide, poly butylene succinate, and biodegradable starch based polymers. The binder can include plaster of Paris, flour, starch, gluten, kaolin, bentonite, colloidal silica, or combinations thereof. Suitable flours include, but are not limited to, rice flour, wheat flour, and bleached wheat flour. Suitable starches include, but are not limited to, dextrin modified starches.

In some instances, the pH buffers include MgO, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The fertilizer described herein can be comprised in a composition useful for application to soil. In some aspects, in addition to the fertilizer, the composition may include other fertilizer compounds, micronutrients, primary nutrients, urea, additional nitrogen nutrients, insecticides, herbicides, or fungicides, or combinations thereof. The fertilizers described herein can also be included in a blended composition comprising other fertilizers. The other fertilizer can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A fertilizer formed into a granule can have desirable physical properties such as desired levels of abrasion resistance, granule strength, pelletizability, hygroscopicity, granule shape, and size distribution. In some aspects, The fertilizer granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the fertilizer granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the fertilizer granule can dissolve in 1 ml of water at a pH 7, under stirring at a rate 90 to 110 rpm, and at an ambient temperature, within 5 minutes of adding 100 mg of the fertilizer granules to the water. In some aspects, the fertilizer granule is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved fertilizer granules with individual size 2 to 4 mm, and total volume 100 cm$^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of % weight loss using the formula:

$$\text{Weight loss due to attrition (wt. \%)} = \frac{\textit{weight of sample remained on 2 mm sieve ((W2))}}{\textit{intial weight of the sample (W1)}} \times 100$$

**II. Method of Making a Fertilizer**

Referring to FIG. 2, a schematic of a system and method for making a fertilizer according to one example of the present invention is described. The system 200 can include a granulator 202 and a dryer 204. A feed mixture 206 can be granulated in the granulator 202 in the presence of water to form a wet granulated mixture 208. The water can be provided with the feed mixture 206, and/or can be added separately to the granulator 202. The wet granulated mixture 208 can be dried in the dryer 204 to obtain dry granulated mixture 210 containing the fertilizer.

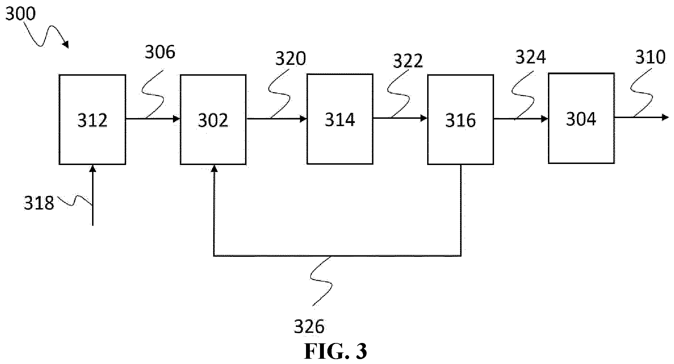

Referring to FIG. 3, a schematic of a system and method for making a fertilizer according to another example of the present invention is described. The system 300 can include a mixer/reactor 312, though the mixer and the reactor can be two, three, four, or more components, such as two reactors and a mixer or a reactor and a mixer. The system 300 can include a granulator 302, a spheronizer 314, one or more size screens 316, and a dryer 304, or any combination thereof. The feed mixture ingredients 318, separately and/or at any possible combination can be added to the mixer/reactor 312. In the mixer/reactor 312, the feed ingredients can be reacted and/or mixed to form the feed mixture 306. Feed mixture 306 can be granulated in the granulator 302 in presence or absence of additional water to form a wet granulated mixture 320. Granules of the wet granulated mixture 320 can be spheronized in the spheronizer 314 to form a wet granulated mixture 322 containing substantially spherical granules. The wet granulated mixture 322 can be passed through one or more size screens 316 to separate granules having a size smaller or bigger than a desired size from the wet granulated mixture 322 and obtain a wet granulated mixture 324 containing granules of desired size. At least a portion of the granules separated 326 from the granulation mixture 324 containing granules of desired size can be recycled to the granulator 302. The wet granulated mixture 324 containing granules of desired size can be dried in the dryer 304 to obtain dry granulated mixture 310 containing the fertilizer granule. In some aspects, the mixer/reactor 312 can contain a ribbon mixer.

The feed mixture ingredients 318 can include i) a Ca source, e.g., phosphogypsum, ii) a N source, e.g., $NH_3$, iii) a C source, e.g., $CO_2$, and iv) a K source, e.g., KCl. In some instances, a mixture ingredient provides more than one of Ca, N, C, K, S, and/or Cl substance. In certain aspects, one or more ingredients can be added as a water solution. In some instances, one or more ingredients can be added as a gas. In some instances, the $NH_3$ and/or $CO_2$ are provided at a pressure above 1 bar, such as at, or between, or of any range of 1.2, 1.3, 1.4, 1.5, 2, 2.5, 3, 3.5, 4, 4.5, 5, 5.5., 6, 6.5, 7, 7.5, 8, 9, 10, 15, 20, 25, 30, 35, and 40 bar. In some instances, a portion of the mixture ingredients are provided as a powder.

The feed mixture 206, 306 can contain Ca, N, C, K, S, and/or Cl. In some aspects, the feed mixture 206, 306 can contain unreacted i) phosphogypsum, ii) ammonia, iii) carbon dioxide, and iv) potassium chloride, or an combination thereof. In some aspects, the feed mixture 318 can contain i) phosphogypsum, ii) ammonia, iii) carbon dioxide, and iv) potassium chloride, or any combination thereof.

Water can be added to the feed mixture in the mixer/reactor 312 and/or in the granulator 202, 302. In certain aspects, 5 gm to 20 gm, or at least any one of, at most any one of, equal to any one of, or between any two 5, 6, 7, 8, 9, 10, 11, 12, 13, 14, 15, 16, 17, 18, 19, and 20 gm of water in total (e.g., added with one or more feed mixture ingredients and/or separately) can be added to the feed mixture, per 100 gm of feed mixture.

In some aspects, the granulator 202, 302 can be a drum granulator, pugmill granulator, pan granulator, solid mixer, abrasion drum, extruder, high-shear mixer granulator, roller granulator, mycromix, or a round bottom flask. In the granulator 202, 302 the feed mixture 206, 306 can be granulated by agglomeration, spray granulation, compaction, slurry granulation and/or high-shear mixer granulation. In some particular aspect, the feed mixture 206, 306 can be granulated in the granulator 202, 302 by compaction. In some aspects, the granulator 202, 302 can contain at least two rollers and compaction granulation can include compressing the feed mixture using the at least two rollers. In some aspects, the two rollers can be moved in counter current direction during compaction. In some aspects, the feed mixture can be compressed into shaped pellets, such as cylindrical pellets, by the at least two rollers. In some aspects, a surface of one roller can have desired holes to compress the feed mixture into the holes, and the surface of the other roller can push the feed mixture into the holes. Pressure during granulation, e.g. compaction granulation can be 1 bar to 40 bar, or at least any one of, at most any one of, equal to any one of, or between any two 1, 2, 3, 4, 5, 10, 15, 20, 25, 30, 35, and 40 bar. In certain aspects, the feed mixture can be granulated in the granulator 202, 302 at ambient temperature to 50 °C, or at least any one of, at most any one of, equal to any one of, or between any two of -20, -15, -10, 0, 5, 10, 15, 20, 25, 30, 35, 40, 45 and 50 °C.

In some aspects, reacting of the feed mixture ingredients, mixing, and granulating the feed mixture can be performed in different containers, e.g., the mixer/reactor 312 and the granulator 302 can be different containers. In some aspects, reacting of the feed mixture ingredients, mixing, and granulating the feed mixture can be performed in the same container, e.g., the mixer/reactor 312 and the granulator 302 can be the same container (not shown).

In some instances, the fertilizer can be extruded before drying. The extruder can extrude the fertilizer at pressures at least, at most, equal to, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 bar. The extruder can extrude the fertilizer at temperatures at least, at most, equal to, or between any two of -20, -15, -10, 0, 5, 10, 15, 20, 25, 30, 35, 40, 45 and 50 °C. The extrudate can be sliced or divided before drying, such as by a die.

In certain aspect, the desired size of a final fertilizer product, such as a granule, can be 0.5 to 5 mm, or 1 to 4 mm, and having a size lower than 0.5 mm or 1 mm, and/or having a size bigger than 4 mm or 5 mm can be separated from the wet granulated mixture 322 in the one or more size screens 316. In certain aspects, the wet granulated mixture can be rounded and/or spheronized in a spheronizer. In some instances, the wet granulated mixture is contacted with a spheronizer for at least any one of, at most any one of, equal to any one of, or between any two of 5, 10, 15, 20, 25, 30, 35, 40, 50, or 60 seconds. The spheronizer in some instances has a rotating or rotatable disk capable of rotating at least any one of, at most any one of, equal to any one of, or between any two of 200, 500, 1000, 1500, 2000, 2500, 3000, 3500, 4000, 4500, 5000 rpm. In certain aspects, the wet granulated mixture can be dried in the dryer 208, 308 at a temperature 40 °C to 85 °C, or at least any one of, at most any one of, equal to any one of, or between any two of 40, 45, 50, 55, 60, 65, 70, 75, 80 and 85 °C. In some aspects, the dryer 208, 308 can be a fluid bed dryer, drum dryer, or flash dryer. In some aspects, the wet granulated mixture can be dried in the dryer 208, 308 with an hot air flow having a flow rate of at least any one of, at most any one of, equal to any one of, or between any two of 100, 150, 200, 250, 300, 350, 400, 450, and 500 m$^3$/hr and/or a rotation of at least any one of, at most any one of, equal to any one of, or between any two of 5, 10, 15, 20, 25, 30, 35, 40, 45, and 50 rpm.

## III. Methods of Using the Fertilizer

The fertilizer, including fertilizer granules, compositions containing the fertilizer, and fertilizer blends containing the fertilizer of the present disclosure can be used in methods of increasing the amount of one or more plant nutrients in soil and of enhancing plant growth. Such methods can include applying to the soil an effective amount of a composition and/or blend containing the fertilizer of the present invention. The method may include increasing the growth and yield of crops, trees, ornamentals, etc., such as, for example, palm, coconut, rice, wheat, corn, barley, oats, and/or soybeans. The method can include applying the fertilizer blend of the present invention to at least one of a soil, an organism, a liquid carrier, a liquid solvent, etc. The composition(s) and/or fertilizer blends(s) containing the fertilizer can be applied to plants and/or soil as a top dressing fertilizer, basal fertilizer, and/or through any suitable method of application.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

The effectiveness of compositions comprising the fertilizer of the present invention can be ascertained by measuring the amount of calcium and optionally other nutrients in the soil at various times after applying the fertilizer composition to the soil. It is understood that different soils have different characteristics, which can affect the stability of the nutrients in the soil. The effectiveness of a fertilizer composition can also be directly compared to other fertilizer compositions by doing a side-by-side comparison in the same soil under the same conditions.

## Examples

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

**Example 1**

**Production of Calcium Fertilizers**

Step 1: 100 g of a $CaSO_4$ suspension can be charged to a Parr reactor and heated to a temperature of 60°C. Ammonia and $CO_2$ gases with flow rate 125 cc/min each can be mixed with mole ratio 1:1 and at 5 bar flow through the $CaSO_4$ suspension to cause a reaction. The reaction can continue for 5 hours at a temperature of 60°C. After the reaction completion, 134 g of product is expected to be produced. The produced product would comprise a mixture of $(NH_4)_2SO_4$ and $CaCO_3$ and some unreacted $CaSO_4$.

Step 2: The product comprising a mixture of $(NH_4)_2SO_4$ and $CaCO_3$ from step 1 will be mixed with 15 g KCl and charged to a Parr reactor. The mixture can be heated at 60°C for 5 hours. The process of this step can be described by the stoichiometric reaction:

$$2KCl + CaSO_4 \rightarrow K_2SO_4 + CaCl_2$$

The products of step 1 and 2 can be mixed to produce a final product comprising the composition $NH_4KSO_4$ and $CaCl_2$ and $CaCO_3$ where the nitrogen content is expected to be between 12-16%, such as 12-15%, sulfur between 20-23%, and potassium 10-14% (12%-17% as $K_2O$) based on the weight of the composition.

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept, spirit and scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the spirit, scope and concept of the invention as defined by the appended claims.

**Claims**

1. A fertilizer comprising a mixture comprising:

   potassium ammonium sulfate ($KNH_4SO_4$); and
   at least two different calcium compounds.

2. The fertilizer of claim 1, wherein the at least two different calcium compounds comprises calcium chloride (CaCh).

3. The fertilizer of any one of claims 1 or 2, wherein the at least two different calcium compounds comprises calcium carbonate ($CaCO_3$).

4. The fertilizer of any one of claims 1 to 3, wherein the $CaCO_3$ at least partially encapsulates at least a portion of the $KNH_4SO_4$.

5. The fertilizer of any one of claims 1 to 4, wherein the at least two different calcium compounds comprise $CaCl_2$ and $CaCO_3$, preferably with a weight ratio of $CaCO_3$ to $CaCl_2$ of 4:1 to 10:1.

6. The fertilizer of any one of claims 1 to 5, wherein the mixture comprises

   12 wt. % to 16 wt. % nitrogen present in the form of ammonium;
   20 wt. % to 23 wt. % sulfur in the form of sulfate; and
   10 wt. % to 14 wt. % potassium;

   wherein the wt. % are based on the total weight of the fertilizer.

7. A method for making a fertilizer, the method comprising

   (a) contacting calcium sulfate with ammonia and carbon dioxide to generate a first product comprising calcium carbonate ($CaCO_3$) and ammonium sulfate ($(NH_4)_2SO_4$) and optionally unreacted calcium sulfate;

(b) contacting calcium sulfate with potassium chloride to generate a second product comprising calcium chloride (CaCh) and potassium sulfate ($K_2SO_4$); and

(c) mixing the first product and the second product to generate the fertilizer.

8. The method of claim 7, wherein a source of calcium sulfate in step (a) and/or (b) is gypsum.

9. The method of any one of claims 7 or 8, wherein step (b) comprises contacting at least a portion of the first product with the potassium chloride.

10. The method of any one of claims 7 to 9, wherein at least a portion of the calcium sulfate of step (b) is obtained from unreacted calcium sulfate of step (a).

11. The method of any one of claims 7 to 10, wherein all of the calcium sulfate of step (b) is obtained from unreacted calcium sulfate of step (a).

12. The method of any one of claims 9 to 11, wherein contacting at least a portion of the first product with the potassium chloride in step (b) produces $KNH_4SO_4$ by reacting potassium sulfate with ammonia and water.

13. The method of any one of claims 7 to 12, wherein step (c) generates a fertilizer comprising $KNH_4SO_4$, $CaCl_2$, and $CaCO_3$.

14. The method of any one of claims 7 to 13, wherein the contacting step (a) and/or contacting step (b) occur at approximately 50°C to 70°C and/or for 3 to 12 hours.

15. The method of any one of claims 7 to 14, wherein the fertilizer comprises the fertilizer of any one of claims 1 to 6.

**FIG. 1**

100

102

101

**FIG. 2**

200

206

202

208

204

210

FIG. 3

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2004 0101839 A (CHOI EUL SOON; CHOI HO KEUN) 3 December 2004 (2004-12-03) * paragraphs [0009], [0003], [0029], [0045] * | 1-6 | INV. C01D5/00 C05C3/00 C05G5/30 |
| A | US 10 710 939 B2 (GREENTECHNOLOGIES LLC [US]) 14 July 2020 (2020-07-14) * col.3 1.5-35; figures 1,2 * | 1-6 | |
| Y | US 2018/230065 A1 (MAITI PRATYUSH [IN] ET AL) 16 August 2018 (2018-08-16) * paragraphs [0007], [0008], [0070]; figure 1 * | 1-6 | |
| Y | US 9 200 347 B2 (JANG YOUNG NAM [KR]; RYU KYUNG WON [KR] ET AL.) 1 December 2015 (2015-12-01) * col. 4 1. 19-48; figure 1 * | 7-15 | |
| Y | FERNÁNDEZ-LOZANO JOSÉ A ET AL: "Production of glaserite and potassium sulphate from gypsum and sylvinite catalysed by ammonia", CHEMICAL ENGENEERING JOURNAL, vol. 67, no. 1, 1 April 1997 (1997-04-01), pages 1-7, XP093004926, AMSTERDAM, NL ISSN: 1385-8947, DOI: 10.1016/S1385-8947(97)00015-6 * page 6 "Conversion of residual gypsum" * | 7-15 | TECHNICAL FIELDS SEARCHED (IPC) C01G C01D C05C C05G |

-/--

The present search report has been drawn up for all claims

| Place of search | Date of completion of the search | Examiner |
|---|---|---|
| The Hague | 5 December 2022 | Goodman, Marco |

EPO FORM 1503 03.82 (P04C01)

Europäisches
Patentamt

European
Patent Office

Office européen
des brevets

## EUROPEAN SEARCH REPORT

Application Number

EP 22 18 2220

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZAPP KARL-HEINZ ET AL: "Ammonium Compounds, 2. Ammonium Sulfate", INTERNET CITATION, 15 June 2000 (2000-06-15), pages 1, 11-14, XP002592516, Retrieved from the Internet: URL:http://mrw.interscience.wiley.com/emrw /9783527306732/ueic/article/a02_243/curren t/pdf [retrieved on 2010-07-15] * page 13, point 2.2.4 * ----- | 1-15 | |

TECHNICAL FIELDS
SEARCHED (IPC)

The present search report has been drawn up for all claims

| Place of search | Date of completion of the search | Examiner |
|---|---|---|
| The Hague | 5 December 2022 | Goodman, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2220

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2022

| Patent document cited in search report | | Publication date | Patent family member(s) | | Publication date |
|---|---|---|---|---|---|
| KR 20040101839 | A | 03-12-2004 | NONE | | |
| US 10710939 | B2 | 14-07-2020 | CA | 3082446 A1 | 23-05-2019 |
| | | | US | 2019152870 A1 | 23-05-2019 |
| | | | US | 2019152872 A1 | 23-05-2019 |
| | | | US | 2020157016 A1 | 21-05-2020 |
| | | | US | 2021122685 A1 | 29-04-2021 |
| | | | WO | 2019097484 A1 | 23-05-2019 |
| US 2018230065 | A1 | 16-08-2018 | US | 2018230065 A1 | 16-08-2018 |
| | | | WO | 2016059651 A1 | 21-04-2016 |
| US 9200347 | B2 | 01-12-2015 | CN | 103874658 A | 18-06-2014 |
| | | | DE | 112012002980 T5 | 22-05-2014 |
| | | | JP | 5807284 B2 | 10-11-2015 |
| | | | JP | 2014520754 A | 25-08-2014 |
| | | | KR | 20130009705 A | 23-01-2013 |
| | | | US | 2014161692 A1 | 12-06-2014 |
| | | | WO | 2013012214 A2 | 24-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MIGUEL ROSALES et al.** *Front. Plant Sci.,* 26 May 2020